# EUROPEAN PATENT SPECIFICATION

(11) **EP 0 551 511 B1**
(45) Date of publication and mention of the grant of the patent: **25.11.1998**
(21) Application number: 92918463.8
(22) Date of filing: 30.07.1992
(51) Int. Cl.: A01B 73/02, A01B 59/048

(54) **A SOIL CULTIVATING MACHINE**
BODENBEARBEITUNGSMASCHINE
CULTIVATEUR

(30) Priority: 02.08.1991 NL 9101330
(43) Date of publication of application: 21.07.1993
(73) Proprietor: C. van der Lely N.V., 3155 PD Maasland (NL)
(72) Inventor: VAN DER LELY, Cornelis, CH-6300 Zug (CH)
(74) Representative: Corten, Maurice Jean F.M.
(86) International application number: NL9200136
(87) International publication number: WO9302542

(56) References cited:
- EP-A- 0 198 563
- EP-A- 0 199 406
- EP-A- 0 431 988
- FR-A- 2 512 626

## Description

The present invention relates to a soil cultivating machine as described in the preamble of claim 1.

A machine of this type is known from EP-A-0 422 721. The units with the soil cultivating members of this machine are pivoting about an axis extending in the direction of travel which is arranged between the frame and an intermediate beam, in order to obtain a transport position wherein the units are raised and the width of the machine is reduced. Apart from the fact that an upwardly directed force that has to be produced in order to raise the units of such a machine, is less favourable, the units are arranged at the front side of a tractor and may obstruct the driver's view of the traffic situation. Also, the known machine cannot be easily adapted to the possibly varying working width of different machines which can be coupled to the rear lifting hitch of the tractor. The object of the present invention is to reduce the width of the known machine in a manner which overcomes the abovementioned disadvanges. According to the invention such is realized by a construction according to the characterizing part of claim 1. With such a construction the intermediate beams may be kept relatively short, so that contrary to the known machine, both the intermediate beam and the working units can be kept within a maximum transport width, however, without reducing the maximum possible working width. Further, according to an inventive aspect such a machine also has the advantage that the transport position may be reached without the need for excessive upwardly directed forces.

Yet another advantage of the construction according to the invention is that the machine can be operative at different distances from the centre line of the machine so that it can be combined with other machines of different sizes. The advantages may be obtained without or at least without excessive increase in the forces to be countered by the intermediate members, as according to the invention such forces are absorbed by the elongated frame beam. In the particular case where the intermediate beams are formed by a parallelogram construction, the arms thereof may in most cases remain predominantly transverse to the direction of travel, thus reducing the force necessary for keeping the parallelogram in position.

It is remarked that the European Patent Application 0 431 988 describes a chassis for a machine wherein working members such as drilling coulters may be displaced from a working position to a more centrally displaced transport position by means of a telescopic construction. During working of the known machine the problem remains that working units of a large width will either remain sticking out the allowed transport width, or will not have the maximal working width.

It is further remarked that European Patent Application 0 199 406 describes a soil cultivating machine couplable of working laterally and closely aside a tractor. The machine is primarily designed to cooperate with a revolving plow at the rear hitch of a tractor and is capable of being swung from one side of a tractor to the other side by means of a parallelogram construction coupled to a frame beam corresponding in width to the width of the lifting hitch. In order to reach maximal working width the parallelogram arm should disadvantageously be of considerable length to compensate the principle inability to stretch the parallelogram construction entirely in lateral direction.

In accordance with a particular embodiment, the soil working members are movable from a working position to a transport position and vice versa in an approximately straight line transversely to the direction of operative travel.

For a better understanding of the invention and to show how the same may be carried into effect, the invention will now be described with reference to three embodiments shown in the accompanying drawings, wherein:
Figure 1 is a plan view of an embodiment of the soil cultivating machine in accordance with the invention, coupled to the front lifting hitch of a tractor;
Figure 2 is a side view of the machine, also in the situation in which it is coupled to a tractor, taken in the direction of the arrow II in Figure 1;
Figure 3 shows, to an enlarged scale, a portion of the machine taken in the direction of the arrow III in Figure 1;
Figure 4 is a cross-sectional view taken on the line IV-IV in Figure 3;
Figure 5 is a front view of a portion of the machine taken in the direction of the arrow V in Figure 1;
Figure 6 is a front view, corresponding to Figure 5, of a portion of the machine in the transport position.

The invention is in no way limited to the embodiment illustrated and described here; it only serves by way of illustration of the inventive idea.

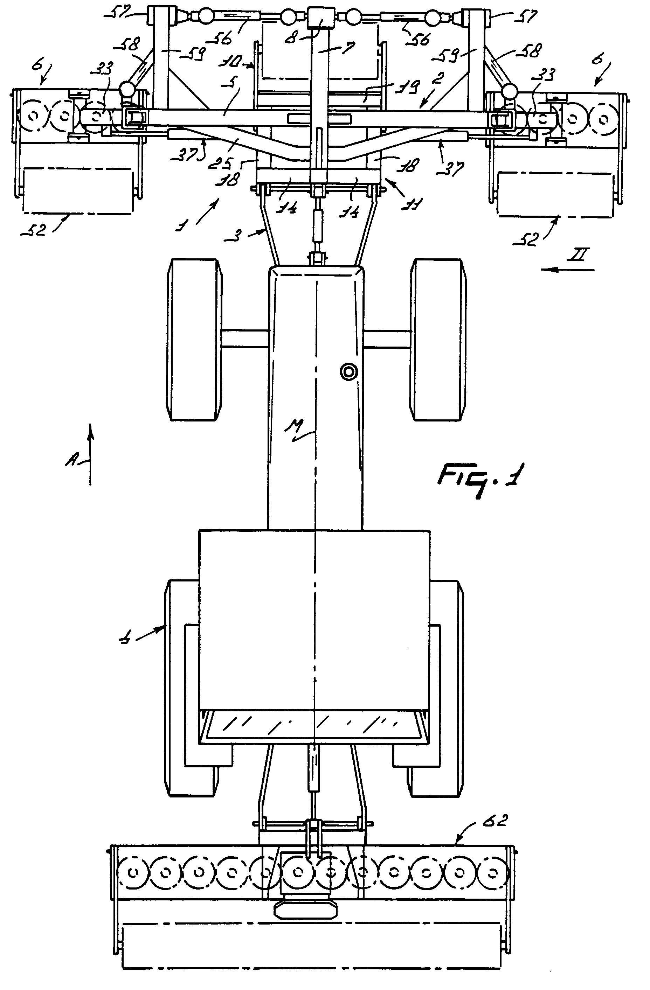

As is shown in Figure 1, the soil cultivating machine 1 in accordance with the invention includes a central framework 2, by means of which the machine 1 is couplable to the three-point lifting hitch 3 of a tractor 4. A carrier beam 5 is suspended from this framework 2 in such a manner that it can reciprocate about a central line M which is located parallel to the direction of operative travel A of the machine and the tractor. A soil cultivating implement 6, in the present case a p.t.o.-driven rotary harrow is connected pivotably to each of the ends of the carrier beam 5. The central framework is provided at the leading end of a top rod 7 located in the midway point with a transmission box for any optional drive of the soil cultivating implements 6 arranged at its sides. In the midway point of the machine, at the leading side, under the framework 2, there is provided a roller 10 for the purpose of supporting and stabilizing the machine.

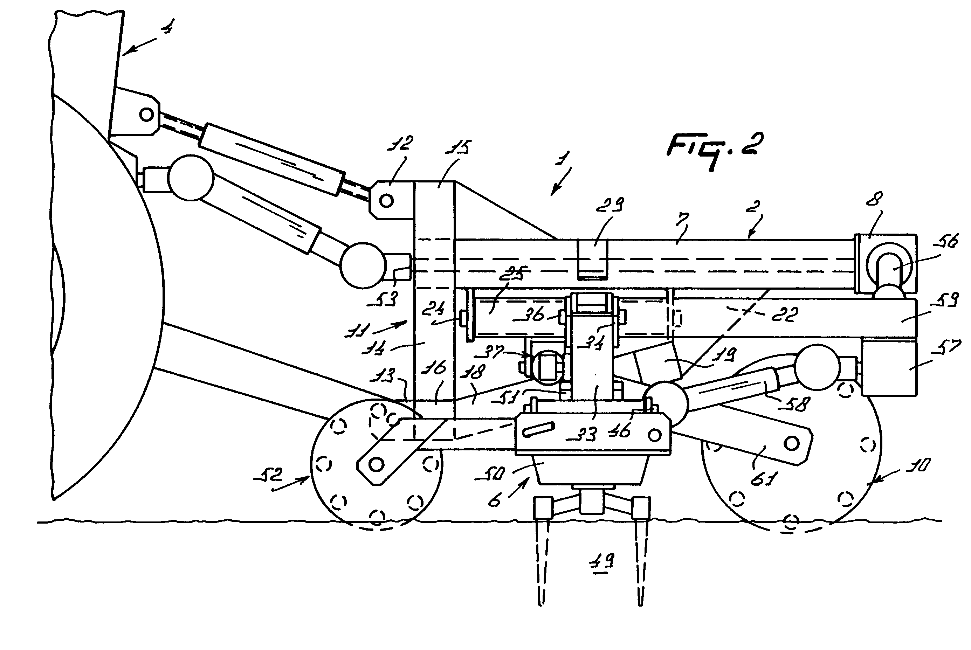

Figure 2 also shows that the central framework 2 is constituted by a vertically arranged, square-iron trestle 11 in the shape of a closed triangle with vertical base. the trestle is provided with an upper pair of lugs and two pairs of lower lugs 13 for coupling to the known per se three-point lifting hitch 3 of a tractor. The obliquely extending legs 14 of the trestle 11 each have their upper end welded to the side edges of a vertically extending frame portion 15 and their lower end to a horizontally extending frame portion 16. Welded to the bottom side of the upper frame portion 15 is a top rod 7, which extends horizontally forwardly from the trestle 11 through the centre line. The top rod 7 is supported by a trestle structure. Two side beams 18 thereof extend parallel to the direction of operative travel A, from the bottom and exterior sides of the three-point trestle 11, obliquely forwardly and upwardly. A connecting beam 19 is welded against the foremost ends of these side beams, transversely to the direction of operative travel A. Near the centre line N, this connecting beam is connected to the top rod 7 via an intermediate section 20. The intermediate section 20 is formed by a vertical lug 21 arranged transversely to the direction of operative travel, to whose side edges strut plates 22 are welded which extend parallel to the direction of travel. Near the trestle 11, the top rod 7 is provided at its lower end with yet another lug 23 which extends, parallel to the lug 21 of the intermediate section, transversely to the direction of operative travel A. A spindle 24 is inserted through the lugs 21, 23, above and parallel to the centre line M.

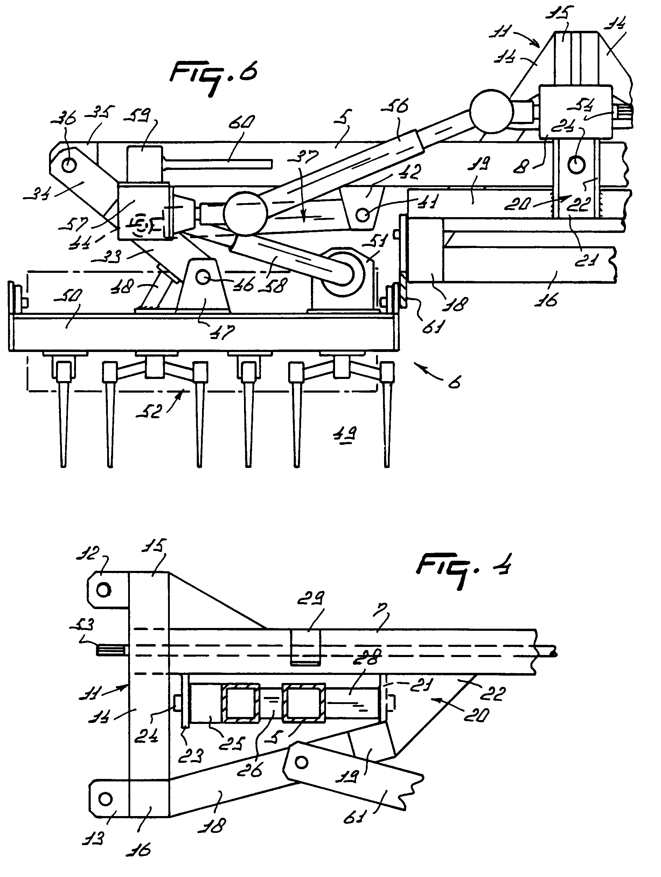

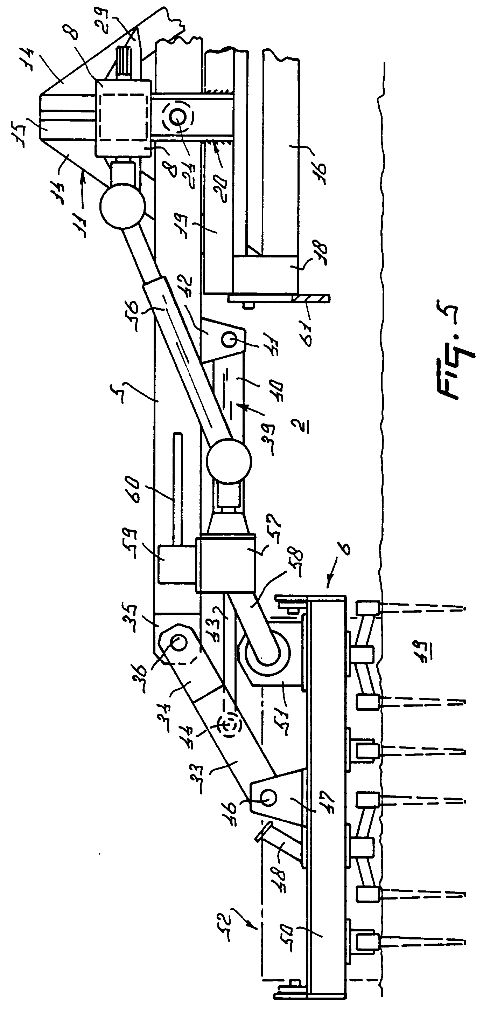

An arcuate stiffening member 25 which, as has also the carrier beam 5, has a quadrangular profile is secured against the rear side of the carrier beam 5. Halfway the carrier beam 5, a connecting beam 26 is welded parallel to the direction of operative travel A between the stiffening member 25 and the carrier beam 5. The carrier beam 5 is suspended capably of reciprocating to the central framework via the spindle 24. In the plane of the carrier beam 5 and the stiffening member 25, this spindle 24 is passed through the centre of the carrier beam 5 and the stiffening member 25. In this situation, the rearmost vertical side of the stiffening member 25, whose central portion extends transversely to the direction of operative travel a, contacts the rearmost lug 23, whilst a spacer element 28 is disposed between the leading lug and the leading vertical side of the carrier beam. Any deflection of the carrier beam 5 is limited, as is shown in Figure 4, by a stop 29 disposed on both sides of the top rod. One end of the stop 29 is folded such that, when the carrier beam 7 is in its utmost oblique position, this stop end is in parallel therewith.

At its extreme ends, the carrier beam 5 is provided with a pivotal portion, alternatively denoted the intermediate beam 33, to which the soil cultivating implement is connected. The pivotal point to the intermediate beam 33 is formed by an outer fork member 34 and an inner fork member 35, it being possible to insert the inner fork member 35 with a close fit in the outer fork member 34. The end of the legs of the respective forks is provided with a bore, through which a spindle 36 is inserted. For the purposes of stiffening the construction, a fitting spacer element 37 is placed around the axle 36 between the legs of the inner fork 35. The respective bases of the fork members 34, 35 are welded to the ends of the carrier beam 5 and the intermediate beam 33.

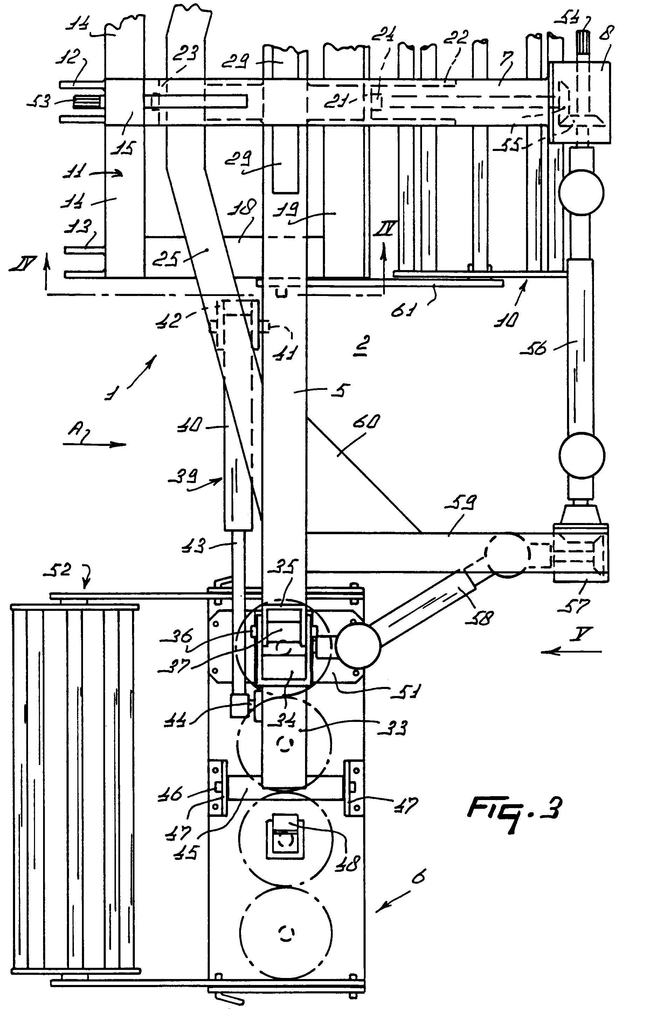

Figure 3 clearly shows that the intermediate beam 33 can be pivoted with respect to the carrier beam 5 with the aid of an adjusting cylinder 37. To that end, the cylinder housing 40 is pivotal about a shaft 41 which extends between the legs 42 of a U-member which has its base welded to the bottom side of the arcuate stiffening member 25. By means of its other end, the adjusting cylinder is positioned via the cylinder rod 43 about a shaft 44 which is welded approximately in the midway point to the rear side of an intermediate beam 33. Both shafts 41, 44 extend in the direction of operative travel A.

Parallel to the direction of operative travel A, the outermost end of the intermediate beam 33 is provided with a relatively thick-walled tube 45, through which an axle 46 is inserted. The soil cultivating implement 6 is connected pivotably to this axle 46, the implement being provided with vertically arranged lugs 47 which extend transversely to the direction of operative travel and between which the said tube portion 45 is disposed with a close fit, via the axle 46. A stop 48 is disposed at the upper side of the p.t.o.-driven rotary harrow, in the imaginary extension of the carrier beam 5 and approximately 10 cms beyond the midway point of the p.t.o.-driven rotary harrow. The upper side of this stop has an oblique plane, so that the p.t.o.-driven rotary harrow is fixed in the transport state in a horizontal position by abutment of this stop on an intermediate beam 33. In this situation, rotation of the harrow, about the shaft 46 is counteracted in one direction by the weight of the transmission box 51 and in the other direction by the stop 48.

The p.t.o.-driven rotary harrow, which in the present implementation constitutes the soil cultivating implement 6, comprises four rotors 49 which in a generally known manner are supported capably of rotation about a vertical shaft and drivably in the frame 50 of the p.t.o.-driven rotary harrow. For that purpose, the inner end of a p.t.o.-driven rotary harrow is fitted with a transmission box 51 which has bevel gear wheels and, for the purpose of connection to a coupling shaft has at its output end a stub axle which is provided with splines. At its rear side, the p.t.o.-driven rotary harrow has a roller 52 which is coupled in accordance with the known per se floating principle. In this situation, the roller is capable of rotation between two arms made of thick steel plate, which arms are attached pivotably to the leading side of the p.t.o.-driven rotary harrow. The arms are kept in a vertical plane between guide plates disposed at one end of the harrow.

For the purpose of driving the p.t.o.-driven rotary harrow(s), the leading end of the top rod 7 of the machine is fitted with a gear box 8 which has a shaft 53 projecting from its rear side for coupling to the power take-off shaft of a tractor and which furthermore has a second shaft 54 which is at a right angle to the first shaft and projects on both sides from the rear box 8. The two shafts 53, 54 are inter-connected via a transmission having bevel gear wheels 55. Each of the two laterally extending portions is equipped with a coupling shaft 56 which extends transversely to the direction of operative travel A and which has its outermost ends likewise coupled to a gear box 57 for right-angled transmission. The second shaft of this laterally extending gear box 57 projects, however, only at the rear side from the gear box. Connected to the stub axle of this output end there is a coupling shaft 58 which has its other end connected to the gear box 51 of the p.t.o.-driven rotary harrow. The gear boxes 57 positioned on both sides of the central gear box 8 are connected to the carrier beam 5 via a forwardly projecting intermediate beam 59. Near a point where they are in pivotal connection with the shaft 36, the auxiliary beams are welded to the leading edge of the carrier beam 5. A horizontal strut plate 60 disposed at the interior side stiffens this connection.

In its midway points and at the leading side, the machine is further provided with a roller 10. To this end, the obliquely forwardly and upwardly arranged beams 18 of the framework 2 have a stub axle at their outermost sides at equal heights and equidistantly from the trestle for the three-point lifting hitch. Pivotal about these stub axles is a pair of arms 61, between the leading ends of which a roller 18 is disposed which is rotatable about a bearing-supported shaft.

The mode of operation of the machine 1 in accordance with the first embodiment is such that the machine is combined with a further machine for either a secondary or a primary soil working action. When the machine is combined with an implement for secondary soil working, the two soil cultivating implements 6 operate simultaneously. In Figure 1 this is represented as a connection to a p.t.o.-driven rotary harrow 62 having a width of approximately 3 metres. For that purpose, the adjusting cylinders 39 are adjusted such, with the aid of the standard equipment of the tractor 4 and from the cab in a lifted state of the lifting hitch 3, that both implements 6 are contiguous to the working width of the combined machine, in this case the p.t.o.-driven rotary harrow 62. All this results from the fact that the intermediate beams 33 to which the cylinder rod 43 is connected is pivotal. Since also the soil cultivating implement 6 is pivotably connected to an intermediate beam, an implement 6 can be operative at any angle between an intermediate beam and the carrier beam. This means that an implement can be operative at different distances from the centre line M of the machine. As a result thereof, the machine 1 according to the invention can be combined for a subsequent contiguous operating run with other machines of any optional dimensions. As the length of an intermediate beam approximately corresponds to half the working width of an implement, an implement can be moved from the transport position through a distance equal to its working width, approximately 1 metre in the present case.

Of prime importance during travel of a driven implement 6 is the construction in which the drive is effected via a gear box which, taken in the direction of operative travel, is located at some distances from the implement and likewise approximately halfway the working range of an implement. In this situation, the midway point of the working range is determined by the location of the pivot between the extreme ends and the carrier beam. When such a construction is used, the required telescopic shift of a coupling shaft is only a fraction of the maximum displacement of a soil cultivating implement. Once it has been lifted from the soil, the machine can be moved to a transport position. Then the soil cultivating implement initially tilts over to the side where the transmission box is present. Near the transport position, the stop on the soil working implement comes into contact with the intermediate beam and during further displacement the implement is forced into an opposite direction about its shaft. As a result thereof, the soil cultivating implement is in the transport state in an at least substantially horizontal position, equal to the position in the operating state. Put differently, the spatial orientation of the soil cultivating implement in the transport position is equal to its spatial orientation during operation. Maintaining the spatial orientation of an object implies that this object can only be subjected to translation. Needless to say that all this implies that any form of rotation is impossible. The construction described has for its further result that, during movement to the transport position, an implement remains at approximately the same level, so that, compared to a displacement in which the implement is pivoted upwardly, no heavy adjusting cylinders are required. Once the implement is in the transport position, the overall width of the machine does not exceed three metres. During movement to the transport position, both implements move in one line transversely to the direction of operative travel. Using such a construction, in which the implements are in any position located at equal distances behind the tractor, it is possible for the machine to be mounted very close to the tractor. This has the advantage that the machine can be coupled to a relatively light tractor.

In combination with an implement for primary soil cultivation, according to the previously worked and non-worked states of the field and the progression of the tractor on the boundary thereof, only one soil working implement is operative. This is enabled by the shaft 24, around which the carrier beam 5 is pivotal; on adjusting one implement to the working position gravity moves it downwards, whereas the implement that is in the transport position moves upwards. This causes the difference in level required to render it possible to introduce only one of the two implements into the soil, which difference cannot be obtained by a simple lifting operation by means of the lifting hitch of the tractor.

## Claims

1. A. p.t.o.-driven rotary harrow, having plurality power-driven soil working members, and having a frame (2) including a frame beam (5) which extends transversely to the direction of operative travel (A), and provided with coupling means (11) for connecting the machine to a lifting hitch (3) arranged at the front side of a tractor, said power-driven soil working members (49) being arranged in two working units (6) which are movable relative to the frame (2) from a spaced apart working position to a transport position wherein the width of the machine is narrowed and vice versa, by means of two intermediate beams (33) extending between the frame (2) and the working units (6), characterized in that the frame beam (5) extends substantially beyond the width of the lifting hitch (3) and the intermediate beams (33) each being pivotally connected with the aid of shafts (36, 46) arranged in the direction of operative travel (A) to an end portion of said frame beam (5) and to a working unit (6), such that the units (6) are capable of being moved towards each other in an transport position wherein they extend within a substantially horizontal plane.

2. A soil cultivating machine as claimed in claim 1, characterized in that the working units (6) are movable laterally over a distance substantially corresponding to the working width of said working unit.

3. A soil cultivating machine as claimed in claim 1 or 2, characterized in that each working unit (6) comprises near its centre a pivot shaft (46) for an intermediate beam and near an end a drive (51) for the power-driven soil working members.

4. A soil cultivating machine as claimed in claim 1, 2 or 3, characterized in that working units (6) are movable in an approximately straight line transversely to the direction of operative travel (A).

5. A soil cultivating machine as claimed in any one of the preceding claims, characterized in that the drive (51) of a unit comprises a drive shaft (53) extending in the direction of travel (A) which is driven via a coupling shaft (58) of the soil working members, which coupling shaft during movement of a soil working member (49) includes, seen in plan view, an angle with said direction of travel (A) of the machine.

6. A soil cultivating machine as claimed in any one of the preceding claims, characterized in that the frame beam (5) is pivotable in its centre about a shaft (24) arranged in the direction of operative travel (A).

7. A soil cultivating machine as claimed in an one of the preceding claims, characterized in that a working unit (6) comprises four soil working members (49).

## Patentansprüche

1. Zapfwellengetriebene Kreiselegge mit mehreren zwangläufig angetriebenen Bodenbearbeitungsgliedern, mit einem Rahmen (2) mit quer zur Arbeitsrichtung (A) angeordnetem Rahmenbalken (5) sowie mit einer Anschlußvorrichtung (11) zum Anschließen des Gerätes an eine an der Vorderseite eines Schleppers angeordnete Hebevorrichtung (3), wobei die zwangläufig angetriebenen Bodenbearbeitungsglieder (49) in zwei Bearbeitungseinheiten (6) angeordnet sind, die mittels zweier zwischen dem Rahmen (2) und den Bearbeitungseinheiten (6) angeordneter Zwischenbalken (33) relativ zu dem Rahmen (2) aus einer Arbeitslage mit Abstand zueinander in eine Transportlage mit verringerter Maschinenbreite und zurück bewegbar sind,
dadurch gekennzeichnet, daß der Rahmenbalken (5) im wesentlichen über die Breite der Hebevorrichtung (3) hinausreicht und die Zwischenbalken (33) jeweils mittels in Arbeitsrichtung (A) angeordneter Achsen (36, 46) mit einem Ende des Rahmenbalkens (5) sowie mit einer Bearbeitungseinheit (6) schwenkbar verbunden sind, derart, daß die Einheiten (6) in Richtung zueinander in eine Transportlage bewegbar sind, in der sie in einer im wesentlichen horizontalen Ebene liegen.

2. Bodenbearbeitungsmaschine nach Anspruch 1,
dadurch gekennzeichnet, daß die Bearbeitungseinheiten (6) seitwärts über eine Distanz bewegbar sind, die im wesentlichen der Arbeitsbreite der Bearbeitungseinheit entspricht.

3. Bodenbearbeitungsmaschine nach Anspruch 1 oder 2,
dadurch gekennzeichnet, daß jede Bearbeitungseinheit (6) nahe ihrer Mitte eine Schwenkachse (46) für einen Zwischenbalken und nahe einem Ende einen Antrieb (51) für die zwangläufig angetriebenen Bodenbearbeitungsglieder aufweist.

4. Bodenbearbeitungsmaschine nach Anspruch 1, 2 oder 3,
dadurch gekennzeichnet, daß die Bearbeitungseinheiten (6) in annähernd gerader Richtung quer zur Arbeitsrichtung (A) bewegbar sind.

5. Bodenbearbeitungsmaschine nach einem der vorhergehenden Ansprüche,
dadurch gekennzeichnet, daß der Antrieb (51) einer Einheit eine sich in Arbeitsrichtung (A) erstreckende Antriebswelle (53) aufweist, die über eine Kupplungswelle (58) der Bodenbearbeitungsglieder angetrieben wird, wobei die Kupplungswelle während der Bewegung eines Bodenbearbeitungsgliedes (49) in Draufsicht einen Winkel mit der Arbeitsrichtung (A) der Maschine bildet.

6. Bodenbearbeitungsmaschine nach einem der vorhergehenden Ansprüche,
dadurch gekennzeichnet, daß der Rahmenbalken (5) in seiner Mitte um eine in Arbeitsrichtung (A) liegende Achse (24) schwenkbar ist.

7. Bodenbearbeitungsmaschine nach einem der vorhergehenden Ansprüche,
dadurch gekennzeichnet, daß eine Bearbeitungseinheit (6) vier Bodenbearbeitungsglieder (49) aufweist.

## Revendications

1. Herse rotative entraînée par une prise de force, ayant une pluralité d'organes motorisés de travail du sol, et ayant un châssis (2) comportant une poutre de châssis (5) qui s'étend transversalement au sens de marche (A) du travail, et munie de moyens de couplage (11) pour relier la machine à un dispositif (3) d'attelage-levage disposé à l'avant d'un tracteur, lesdits organes motorisés (49) de travail du sol étant disposés dans deux unités de travail (6) qui sont mobiles par rapport au châssis (2) à partir d'une position de travail où elles sont espacées l'une de l'autre, jusqu'en une position de transport dans laquelle la largeur de la machine est réduite, et vice versa, au moyen de deux poutres intermédiaires (33) s'étendant entre le châssis (2) et les deux unités de travail (6),
**caractérisée** en ce que la poutre de châssis (5) s'étend sensiblement au delà de la largeur du dispositif (3) d'attelage-levage et les poutres intermédiaires (33) étant chacune reliée de manière pivotante à l'aide d'arbres (36, 46) disposés dans le sens de marche (A) du travail à une partie d'extrémité de ladite poutre de châssis (5)et à une unité de travail (6) de telle manière que les unités (6) sont capables d'être entraînées l'une vers l'autre jusqu'en une position de transport dans laquelle elles s'étendent dans un plan sensiblement horizontal.

2. Cultivateur selon la revendication 1, caractérisé en ce que les unités de travail (6) sont mobiles latéralement sur une distance correspondant sensiblement à la largeur de travail de ladite unité de travail.

3. Cultivateur selon la revendication 1 ou 2, caractérisé en ce que chaque unité de travail (6) comprend près de son centre un arbre de pivotement (46) pour une poutre intermédiaire et, près d'une extrémité, une transmission (51) pour les organes motorisés de travail du sol.

4. Cultivateur selon la revendication 1, 2 ou 3, caractérisé en ce que les unités de travail (6) sont mobiles selon une ligne approximativement droite transversalement au sens de marche (A) du travail.

5. Cultivateur selon l'une quelconque des revendications précédentes, caractérisé en ce que la transmission (51) d'une unité comprend un arbre de transmission (53) s'étendant dans le sens de marche (A) du travail qui est entraîné par l'intermédiaire d'un arbre de couplage (58) des organes de travail du sol, lequel arbre de couplage forme, pendant le mouvement d'un organe (49) de travail du sol, en étant vu en plan, un angle avec ledit sens de marche (A) de la machine.

6. Cultivateur selon l'une quelconque des revendications précédentes, caractérisé en ce que la poutre de châssis (5) est pivotante en son centre autour d'un arbre (24) disposé dans le sens de marche (A) du travail.

7. Cultivateur selon l'une quelconque des revendications précédentes, caractérisé en ce qu'une unité de travail (6) comprend quatre organes (49) de travail du sol.
